(19) Europäisches Patentamt
European Patent Office
Office européen des brevets

(11) **EP 3 725 917 A1**

(12) **EUROPÄISCHE PATENTANMELDUNG**

(43) Veröffentlichungstag:
**21.10.2020 Patentblatt 2020/43**

(51) Int Cl.:
*C25B 1/10* *(2006.01)*     *C25B 15/02* *(2006.01)*
*C25B 15/08* *(2006.01)*     *H01M 8/18* *(2006.01)*
*H01M 8/04014* *(2016.01)*     *H01M 8/04007* *(2016.01)*
*H01M 8/04701* *(2016.01)*     *H01M 8/04828* *(2016.01)*
*H01M 8/124* *(2016.01)*

(21) Anmeldenummer: **19169902.4**

(22) Anmeldetag: **17.04.2019**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **SunFire GmbH**
**01237 Dresden (DE)**

(72) Erfinder:
• **Posdziech, Oliver**
**01109 Dresden (DE)**

• **Strohbach, Thomas**
**01309 Dresden (DE)**
• **Blumentritt, Robert**
**01159 Dresden (DE)**
• **Schwarze, Konstantin**
**01277 Dresden (DE)**
• **Greß, Carolin**
**01445 Radebeul (DE)**

(74) Vertreter: **Hansen, Jochen**
**Hansen und Heeschen**
**Patentanwälte**
**Eisenbahnstrasse 5**
**21680 Stade (DE)**

(54) **SOLID OXIDE CELL [SOC]-BETRIEBSVERFAHREN SOWIE SOLID OXIDE CELL [SOC]-ANORDNUNG**

(57) Die Erfindung betrifft ein Solid Oxide Cell [SOC]-Betriebsverfahren, wobei die SOC wenigstens in einem der wenigstens drei Betriebsmodi SOFC oder SOEC oder rSOC, umfassend eine SOEC und eine SOFC, betreibbar ist, wobei die SOC dynamisch betrieben und/oder die SOEC in einem thermoneutralen Betriebspunkt gefahren wird.

Ferner betrifft die Erfindung eine Solid Oxide Cell [SOC]-Anordnung.

**Abb. 1**

EP 3 725 917 A1

**Beschreibung**

Die Erfindung betrifft ein Solid Oxide Cell [SOC] - Betriebsverfahren, wobei die SOC wenigstens in einem der wenigstens drei Betriebsmodi SOFC oder SOEC oder rSOC, wobei die rSOC eine SOEC und eine SOFC umfasst, betreibbar ist, wobei die SOC dynamisch betrieben wird und die SOEC im Wesentlichen oder genau in einem thermoneutralen Betriebspunkt gefahren wird.

Ferner betrifft die Erfindung eine Solid Oxide Cell [SOC]-Anordnung.

Aus dem **Stand der Technik** sind unterschiedliche Verfahren und Anordnungen bekannt, um eine Solid Oxide Cell [SOC] zu betreiben. Es wird ergänzend auf die seitens der Anmelderin bereits eingereichten vielzähligen Anmeldungen hingewiesen.

Aus der Druckschrift US 5,312,699 B1 ist ein kompaktes Energiespeichersystem bekannt, das effizient elektrische Energie erzeugen kann, indem es überschüssige elektrische Energie zunächst gespeichert hat, wobei das Energiespeichersystem eine Elektrolyse- und Brennstoffzelle mit einem Festoxidelektrolyten, ein Dampfzufuhrsystem zum Zuführen von Dampf zur Zelle, einen Wasserstoffspeicher und einen Sauerstoffspeicher zum Speichern von in der Zelle erzeugtem Wasserstoff und Sauerstoff, ein Wärmetauschersystem zur Aufnahme von Wärme des Abgases aus der Zelle ein Raumheizungs-Heißwasserzufuhrsystem zum Erwärmen von Wasser unter Verwendung von aus dem Abgas gewonnener Wärme, und ein Raumheizungs-Kaltwasserzufuhrsystem, das mit einer Absorptionskältemaschine für Kühlwasser durch den Absorptionsprozess in Verbindung steht unter Verwendung von Wärme, die aus dem Wärmetauschersystem gewonnen wird, aufweist.

Weiter ist aus der Druckschrift EP 1 618 622 B1 ein System zur Verwendung von Brennstoffzellen in stationären bzw. mobilen Geräten mit einem stabilen bzw. instabilen Lastprofil bekannt, wobei hier eine Brennstoffzelle, ein Puffer zum Speichern von überschüssiger Energie, der als Regelsystem zwischen der Brennstoffzelle und der Energieverbrauchseinheit dient, eine Abladeeinrichtung zum Ablassen von Energie, wenn der Puffer voll ist oder je nach Bedarf, ein Energieerzeuger bzw. -konverter zum Umwandeln von Energie bei Bedarf in eine andere Energieform, bei einem höheren Energiebedarf, als die Brennstoffzelle erfüllen kann, oder zum Umwandeln von Energie, die nicht verwendet wird und die in einer anderen Form gespeichert werden soll, oder zum Umwandeln von Energie der in dem Puffer gespeichert ist, der in einer anderen Form abgeladen werden soll, vorgesehen sind.

Ferner wird auf die Offenbarung von K. Schwarze, O. Posdziech, S. Kroop, N. Lapeña-Rey, J. Mermelstein, "Green Industrial Hydrogen via Reversible High-Temperature Electrolysis"; ECS Transactions, 2017, Vol. 78, 1 hingewiesen, aus der die Bereitstellung von Wasserstoff und Synthesegas in einer industriellen Umgebung mittels Hochtemperaturelektrolyse (SOEC) oder reversibler Brennstoffzelle (RSOC) offenbart wird, allerdings wird im Stand der Technik nicht beschrieben, wie die Betriebsführung der SOC überhaupt erfolgen könnte, um einem Verwender der Anordnung einen maximalen Nutzen zu generieren, so dass ein wirtschaftlicher Betrieb möglich ist, und welche apparatetechnische Ausführung dazu erforderlich ist.

In der Offenbarung von Q. Fu, J. Schefold, A. Brisse, J. U.Nielsen, "Durability Testing of a High-Temperature Steam Electrolyzer Stack at 700 °C" werden schnelle AN/AUS Zyklen an einer SOEC getestet. Die Haltezeit einer Betriebsphase lag dabei bei mehr als 30 Sekunden.Die zugeführte Dampfmenge wurde so gewählt, dass die SOEC in der AN-Phase ausreichend mit Dampf versorgt wird. Ein Problem dabei ist, dass während der AUS-Phase Dampf ungenutzt die SOEC passiert.

Die **Probleme im Stand der Technik** sind im Wesentlichen die Unwirtschaftlichkeit bestehender Systeme und Betriebsverfahren, da diese nur in der Lage sind, unter zu hohen Kosten entsprechende SOC's in Anlagen zu integrieren. Insbesondere erfolgen Betriebspunktänderungen langsam und diese sind im Wesentlichen mit großen Temperaturänderungen der SOC verbunden, was wiederum zu erheblichen wirtschaftlichen und technischen Nachteilen führt.

Es wurden insbesondere durch tiefergehenden Forschungs- und Entwicklungsaktivitäten durch die Erfinder entsprechende Nachteile beim Stand der Technik erkannt:

- Betrieb von SOC's erfolgt losgelöst vom Bedarf bzw. Angebot von Industrieanlagen;
- statische Regelung einer SOC im "Normalbetrieb";
- SOC-Systeme reagieren thermisch träge, wodurch der Wechsel von Betriebspunkten deutlich verlangsamt wird und letztendlich eine nur geringe Dynamik wenn überhaupt zugelassen werden würde;
- im Teillastbetrieb der Elektrolyse oder im Hot-Standby sinkt die Temperatur des Stacks, wodurch die Dynamik begrenzt oder gar eine schnelle dynamische Regelung ausgeschlossen ist, insbesondere da der Stack erst wieder auf Betriebstemperatur kommen muss;
- Prozessgase müssen bei einem Wechsel zwischen SOFC und SOEC-Modus vom Kühlmodus, da die Temperatur kleiner als die Stacktemperatur ist, zunächst erst auf Temperatur gebracht werden;
- eine rSOC-Umschaltung ist träge, da die Temperatur des Heizers bzw. des Stacks zu niedrig ist und Spannungsgrenzen unter- bzw. überschritten werden;
- bei Änderungen der Last ändert sich die Stacktemperatur, wodurch sich die thermomechanische Beanspruchung des Stacks erhöht, was zu einem frühzeitigem Stackversagen führen kann;
- ein großer Nachteil von SOC's ist die hohe Betriebstemperatur, die zu längeren Anlaufzeiten und mechanischen und chemischen Verträglichkeitsproblemen führt;

- für den Fall, dass eine Elektrolyse in der SOC hochgefahren werden soll, muss erst die Temperatur hierzu steigen, bis die volle Leistung erreicht wird, sonst steigen die Stackspannungen in einen Bereich (größer 1.6 ... 2.0 V pro Zelle - aus heutiger Sicht), der ein irreversibles Versagen des Stacks zur Folge hätte,

- schnelle SOEC-Zyklen sind nur mit geringem Gasumsatz auf Grund der fehlenden dynamischen Änderung möglich, womit eine geringe Effizienz der Energieumwandlung verbunden ist.

Durch diese erkannten Probleme des bekannten Standes der Technik haben sich die Erfinder die **Aufgabe** gestellt, eine Möglichkeit zu schaffen, hocheffizient Energie umzuwandeln, wobei dies dynamisch stattfinden soll und hierzu eine im Stand der Technik bekannte SOC angewandt werden soll, mit wenigstens einem Betriebsmodus ausgewählt aus rSOC, SOEC bzw. SOFC Komponenten.

**Gelöst** wird diese Aufgabe mit einem Solid Oxide Cell [SOC]- Betriebsverfahren gemäß Hauptanspruch sowie einer Solid Oxide Cell [SOC]-Anordnung gemäß nebengeordnetem Anspruch.

Verfahrensgemäß ist das Solid Oxide Cell [SOC]-Betriebsverfahren, bei dem die SOC wenigstens in einem der wenigstens drei Betriebsmodi SOFC und/oder SOEC und/oder rSOC, umfassend eine SOEC und eine SOFC, betreibbar ist, dadurch gekennzeichnet, dass die SOC dynamisch betrieben wird und die SOEC im Wesentlichen oder genau in einem thermoneutralen Betriebspunkt gefahren wird. Hierdurch ist es eine möglichst hocheffiziente Umwandlung von Energie möglich.

Verfahrensgemäß ist das Solid Oxide Cell [SOC]- Betriebsverfahren, wobei die SOC wenigstens in einem der wenigstens drei Betriebsmodi SOFC oder SOEC oder rSOC, wobei die rSOC umfassend eine SOEC und eine SOFC ausgebildet ist, betreibbar ist, dadurch gekennzeichnet, dass die SOC dynamisch betrieben wird. Weiter ist alternativ das Solid Oxide Cell [SOC]-Betriebsverfahren, wobei die SOC wenigstens in einem der wenigstens drei Betriebsmodi SOFC oder SOEC oder rSOC, wobei die rSOC umfassend eine SOEC und eine SOFC ausgebildet ist, betreibbar ist, dadurch gekennzeichnet, dass die SOEC in einem thermoneutralen Betriebspunkt gefahren wird bzw. dass die SOEC im Wesentlichen oder genau in einem thermoneutralen Betriebspunkt gefahren wird. Und weiter ist alternativ das kombinierte Solid Oxide Cell [SOC]- Betriebsverfahren, wobei die SOC wenigstens in einem der wenigstens drei Betriebsmodi SOFC oder SOEC oder rSOC, wobei die rSOC umfassend eine SOEC und eine SOFC ausgebildet ist, betreibbar ist, dadurch gekennzeichnet, dass die SOC dynamisch betrieben und die SOEC in einem thermoneutralen Betriebspunkt gefahren wird. Hierdurch ist eine möglichst hocheffiziente Umwandlung von Energie mittels einer entsprechend erfindungsgemäßen SOC möglich.

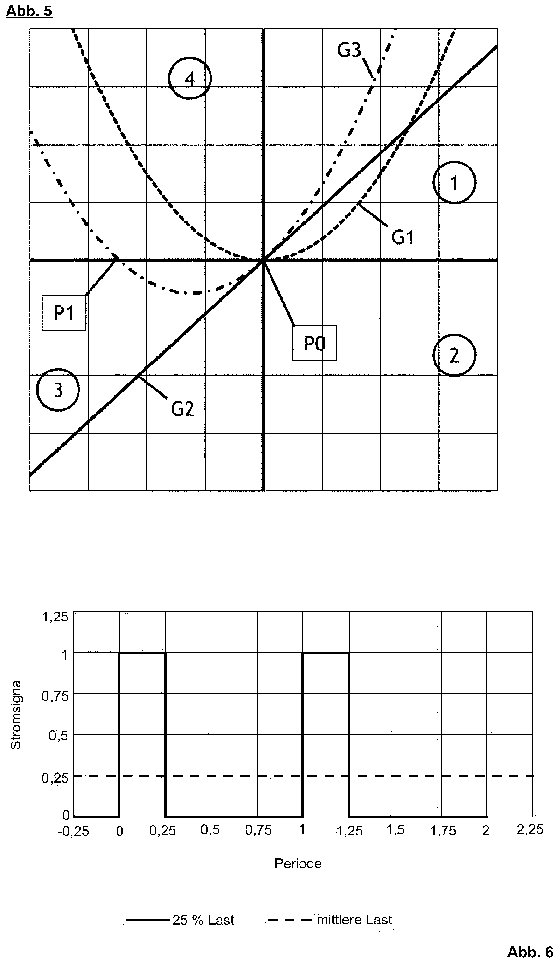

Ein thermoneutraler Betriebspunkt zeichnet sich dadurch aus, dass die durch den Stromfluss generierte Wärmeleistung (Exothermie durch ohmschen Verlust, Graph G1 in Abb. 5) genau der benötigten Wärmeleistung der endothermen Elektrolyse (Graph G2 in Abb. 5) entspricht. Dieser Betriebspunkt ist durch den Punkt P1 in Abb. 5 durch den Schnittpunkt des Graphen G3 mit der x-Achse gekennzeichnet. Die Betriebsspannung in diesem Betriebspunkt ist die thermoneutrale Spannung $U_{tn}$, Gl. 1, wobei $\Delta H_r$ die Reaktionsenthalpie und F die Faradaysche Konstante ist.

Die thermoneutrale Spannung ist anhängig von der Temperatur sowie der Gaszusammensetzung.

$$U_{tn} = \frac{\Delta H_r}{2F} \qquad (1)$$

Die Ohmsche Wärme folgt einem quadratischen Verlauf, entsprechend Gl. 2.

$$P_{Ohm} = R * I^2 \qquad (2)$$

Dabei ist R der Innenwiderstand der SOC. Der Innenwiderstand ist abhängig von der Temperatur und demnach auch die Exothermie. Dieser Zusammenhang wird bei der Regelung ausgenutzt, da er stets zu einem stabilen Betriebsverhalten führt. Bei Vorgabe einer Stromstärke stellt sich ein Gleichgewicht bei der Temperatur ein, bei der der Widerstand so hoch ist, dass die Exothermie des ohmschen Verlusts die Endothermie der Elektrolyse genau ausgleicht. Ist der Widerstand höher (exotherm) steigt die Stacktemperatur an, ist der Widerstand geringer (endotherm), sinkt die Stacktemperatur. Es ist offensichtlich, dass sich bei verschiedenen Betriebspunkten unterschiedliche Betriebstemperaturen für den thermoneutralen Betrieb ergeben. Durch einen sogenannten gepulsten SOEC Betrieb soll die SOEC diskret nur in 2 Punkten Betrieben: P0 (Leerlaufbetrieb) und P1 (thermoneutraler Betrieb).

*Erläuterungen zum gepulsten SOEC-Betrieb:*

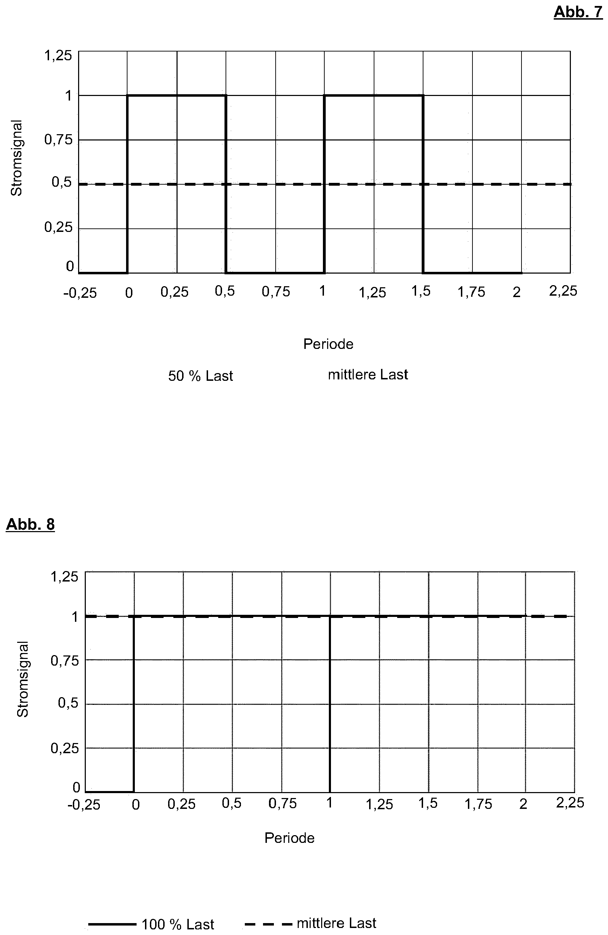

Wie bereits erwähnt, erfordert ein dynamischer SOEC-Betrieb, eine schnelle Umschaltfähigkeit zwischen einem Teillast- und einem Vollastbetrieb in beiden Richtungen, je nachdem, welche Art der Regelleistung durchgeführt werden soll. Ein Teillastbetrieb ist im stationären Fall im SOEC Betrieb immer mit einer Temperaturabsenkung des Systems bzw. des Stacks verbunden, siehe Abb. 8, Betrieb im Quadrant 3. Die Kurve G3 (gesamte Wärmebilanz) ist negativ, das System kühlt ab. Die Temperaturänderung benötigt Zeit, da das System eine endliche Wärmekapazität hat. Der Wechsel von Teillast auf Volllast führt zu einer Temperaturerhöhung. Die Temperaturerhöhung muss im herkömmlichen Betrieb abgewartet werden, um eine Überhitzung des Systems zu vermeiden. Die Zu- oder Abfuhr von Wärmeenergie aus oder in die SOEC benötigt Zeit und ist mit Verlusten verbunden.

Die Anwendung der Pulsweitenmodulation ermöglicht eine kontinuierliche Modulierung der Systemleistung ohne dabei das Temperaturprofil innerhalb des SOC-Stacks zu ändern auch in kurzer Zeit. Dies erhöht zudem die Langlebigkeit der SOC, da die thermomechanischen Beanspruchungen durch zyklische Temperaturänderungen verringert werden und ermöglicht zudem den schnellen Wechsel in andere Betriebsmodi, da sich die Temperatur auch im SOEC-Teillastmodus nicht verringert.

Im Fall, dass die Betriebstemperatur oberhalb oder unterhalb einer maximal zulässigen Temperatur liegt, muss dem Stack Wärme zugeführt oder entzogen werden. Dies geschieht über die Regulierung der Lufteintrittstemperatur und des Luftvolumenstroms sowie der Prozessgaseintrittstemperatur. Soll der Stack gekühlt werden, so muss der Luftvolumenstrom erhöht und/oder die Luft- und/oder Gaseintrittstemperatur verringert werden. Soll der Stack geheizt werden, muss der Luftvolumenstrom erhöht und/oder die Luft- und/oder Gaseintrittstemperatur erhöht werden. Die Wärme kann einem Hochtemperaturspeicher entnommen werden oder elektrisch durch Prozessgasvorheizer zugeheizt werden.

Diesbezüglich können die Prozessgaseintrittstemperaturen vorausgewählt werden, wobei dies in Abhängigkeit der Beobachtung des Zustands der SOC und durch die Vorgabe eines Zielbetriebspunktes erfolgt.

In einer bevorzugten Ausführungsvariante kann die SOC als dynamischer Energiewandler betrieben werden, wobei ein Energiewandeln in Abhängigkeit des Strompreises und/oder der Stromverfügbarkeit erfolgt, was zu einer hocheffizienten und sehr wirtschaftlichen Variante des Energiewandeln und Energiepuffern führt. Hierbei ist dies insbesondere ökonomisch interessant, da durch das Anbieten von Regelleistung die Wirtschaftlichkeit des Systems werden kann. Aus technischer Sicht ist die Umsetzung dieser Ausgestaltung interessant, da ein dynamischer Energiewandler schnelle Lastumschaltungen ermöglicht.

Zur weiteren Optimierung sowohl in wirtschaftlicher als auch in technischer Art das Ausführen wenigstens einer der folgenden Prozessschritte durchgeführt werden:
Nutzung eines bedarfsgerechten, stromseitigen Einsatzes der SOC zur Erhöhung der Wirtschaftlichkeit durch:

- Bereitstellen von Regelleistung:

Ein ständiges Gleichgewicht zwischen Stromerzeugung und -abnahme ist eine wichtige Voraussetzung für einen stabilen und zuverlässigen Netzbetrieb.

Die Übertragungsnetzbetreiber (ÜNB) halten dazu im Rahmen ihrer Systemverantwortung Regelleistung vor, um den Kunden eine zuverlässige Stromversorgung zu gewährleisten.

Abweichungen werden auf der Verbraucherseite durch Schwankungen im Einspeise- und Abnahmeverhalten oder auf der Erzeugungsseite durch schwankende Erzeuger (erneuerbare Energien) oder Störungen (z.B. Kraftwerksausfälle) hervorgerufen. Der ÜNB vergütet Anbieter für das Vorhalten von Regelleistung, die entweder ihren Verbrauch verringern oder zusätzliche elektrische Leistung ins Netz einspeisen. Dazu ist eine schnelle Lastumschaltung erforderlich. Dabei wird zwischen Primärregelung (automatische vollständige Aktivierung bis 30 Sekunden), Sekundärregelung (vollständige Erbringung innerhalb von maximal 5 Minuten) und Tertiärregelung (vollständige Aktivierung binnen 15 Minuten) unterschieden. Zur Bereitstellung der Regelleitung ist ein schnelles Umschalten von Betriebspunkten notwendig.

- Durchführen eines Lastmanagements aktiv:

In den meisten industriellen Anwendungen ist die Leistungsaufnahme vertraglich beschränkt. Bei Überschreitung der Maximalleistung steigen die Stromkosten sehr stark an. Deshalb wird, insbesondere in großen Firmen, ein aktives Lastmanagement betrieben und Verbraucher entsprechend abgeschaltet.

Ein Lastmanagement kann durchgeführt werden, um auf sich ändernde Randbedingungen reagieren zu können. Ein Teillastbetrieb eines Systems, welches aus mehreren SOC-Modulen besteht, kann so realisiert werden, dass nur eine Teilmenge der Module betrieben wird, wobei sich die übrigen Module in einem sogenannten Hot-Standby Modus befinden. Beim Hot-Standby Modus befindet sich ein SOC-Modul nahezu bei Betriebstemperatur, es finden jedoch keine elektrochemischen Reaktionen statt. Die Lastanfahrt kann so relativ schnell erfolgen, da lediglich die Prozessgase und die Elektronik zugeschalten werden müssen.

Eine zweite Möglichkeit besteht durch den gepulsten Betrieb, der in folgenden Abschnitten vertieft erläutert wird.

- Kopplung an fluktuierende erneuerbare Energiequellen / Nachfahren eines Lastprofils von erneuerbarer Energie:

Eine direkte Kopplung einer rSOC-Anlage an fluktuierende erneuerbare Energiequellen (Windenergie, Photovoltaik) erfordert eine hochdynamische Reaktion eines in Elektrolyse betriebenen Systems. Energiewirtschaftlich ist es von Vorteil, wenn eine Umschaltung in einen SOFC-Modus dem Netz Leistung zur Verfügung stellt, auch wenn gerade keine z.B. Wind- und/oder Solarenergie zur Verfügung steht. Hier ist es von Vorteil, wenn der für den SOFC-Betreib erforderlich Brennstoff vorher in der Form von synthetischem Erdgas (SNG), Wasserstoff oder flüssigen Kohlenwasserstoffen im SOEC-Betrieb erzeugt und gespeichert wird. Einen sehr großen Energiespeicher stellt das Erdgasnetz dar.

Weiterhin sind Leistungsspitzen in der Stromerzeugung mit erneuerbaren Energien häufig nicht wirtschaftlich auf der Verbrauchsseite abdeckbar, da dadurch z.B. ein Elektrolyseur überdimensioniert wird und/oder das Netz diese Energie nicht aufnehmen kann (Abregelung von erneuerbaren Energien). Hier bietet es sich an, Strom oder Abwärme des SOFC-Betriebs als Hochtemperaturwärme zu speichern, da die Umwandlung von Strom in Wärme nur mit sehr geringen Investitionskosten verbunden ist und auch das Wärmespeichermaterial sehr kostengünstig ist. Weiterhin kann Überschussstrom als Wärme gespeichert werden, die später nutzbar gemacht werden kann. Dazu kann der Strom dazu verwendet werden um einen Speicher elektrisch zu beheizen.

Zur weiteren Optimierung aus thermodynamischer Sicht kann das Vorsehen eines Hochtemperaturspeichers für schnelle Lastwechsel und das Überführen von gespeicherter Wärme aus und/oder in den Hochtemperaturspeicher bei schnellen Lastwechseln bevorzugt sein, da hierdurch schnelle Lastwechsel leicht zu vollziehen sind und Wärme kurzfristig eingebracht werden kann, die dem Hochtemperaturspeicher entnehmbar ist. Hierbei kann ein Überführen von gespeicherter Wärme aus und/oder in den Hochtemperaturspeicher bei schnellen Lastwechseln und/oder ein Ausgleich von fluktuierender Energie über den Hochtemperaturspeicher und/oder eine Umwandlung der gespeicherten Wärmeenergie in chemische Energie erfolgen.

Der Hochtemperaturspeicher ist vor den Eintritt des Stacks zu setzen. Die Temperatur des Speichers sollte gleich oder höher als die Betriebstemperatur des Stacks liegen bspw. im Bereich von 600 - 1000 °C.

Als Speichermaterialien eignen sich sensible Wärmespeicher, wie bspw. hochtemperaturbeständige Materialen wie Quarzsand, Beton, Keramiken oder Metalle, Latentwärmespeicher wie bspw. Salzschmelzen oder thermochemische Wärmespeicher bzw. Sorptionsspeicher, bspw. oxidieren/reduzieren von Metallen wie Nickel oder Eisen.

Der Wärmespeicher kann durch die Produktgase der SOC in einem exothermen Modus z.B. im SOFC-Betrieb oder durch ein elektrisches Beheizen durch bevorzugt überschüssigem Strom aus erneuerbaren Energiequellen erfolgen. Im SOEC-Betrieb werden dann die Prozessgase durch den Hochtemperaturwärmespeicher geführt, deren Temperatur erhöht und dem Stack zugeführt. Durch eine entsprechende Umschaltvorrichtung kann damit sehr schnell zwischen einer Betriebsführung im exothermen Modus (SOFC) mit Eintrittstemperaturen der Prozessgase unterhalb der Stacktemperatur zu einem thermo-neutralen Modus mit Eintrittstemperaturen in etwa gleich der Stacktemperatur umgeschaltet werden. Ist das Temperaturniveau des Wärmespeichers oberhalb der Stacktemperatur, dann arbeitet die SOEC im endothermen Modus. Hierbei ergeben sich sehr hohe Umwandlungswirkungsgrade und die ursprüngliche dem Wärmespeicher zugeführte Energie effizient in chemische Energie in Form von Wasserstoff oder Synthesegas umgewandelt werden.

Im umgekehrten Fall, wenn eine möglichst dynamische Umstellung von einem thermo-neutralen SOEC-Betrieb in einen exothermen SOFC-Betrieb erfolgen soll, müssen die Prozessgase, die dem Stack zugeführt werden, möglichst schnell abgekühlt werden, bevorzugt auf etwa 600 bis 750°C, um eine Überhitzung des Stacks zu vermeiden. Dabei ist ein Bypass günstig, bei dem ein Teil der Prozessgase um die temperaturerhöhenden Komponenten (Rekuperator, Elektrischer Heizer, Wärmespeicher) herumzuführen und die Eintrittstemperatur auf den gewünschten Einstellwert zu regeln.

*Erläuterungen zum Einsatz von Bypässen:*

Die Nutzung von Bypässen und einer Wärmespeicherung ermöglichen es, die Eintrittstemperaturen der Medien in den Stack sehr schnell zu ändern, so dass die je nach Bedarf niedrig (exotherme SOEC, SOFC) oder hoch sind (endotherme/thermoneutrale SOEC, niedriger Lastpunkt SOFC, Hot-Stand-by SOFC/SOEC). So kann dem System schnell Wärmeenergie zugeführt oder entzogen werden. Die Zu- oder Abfuhr von Wärmeenergie aus oder in die SOEC benötigt Zeit und ist mit Verlusten verbunden.

In einer besonders bevorzugten Ausgestaltungsvariante kann eine Regelung erfolgen, ausgewählt aus gepulster Leistung und/oder spannungsgeführtem Betrieb und/oder Nutzung von Bypässen und/oder Dampfregelung.

Bevorzugt kann eine optimierte Temperaturführung auch während Laständerungen und/oder Betriebsmodusänderungen erfolgen. Unterschiedliche Lastpunkte haben unterschiedliche Gleichgewichtstemperaturen, da bevorzugt ein thermoneutraler Betrieb realisiert werden soll. Bei einer Lastpunktänderung werden die Eingangsparameter Prozessgaseintrittstemperatur bereits bei Lastanfahrt so eingestellt, dass sie den erwarteten Werten des Zielbetriebspunktes entsprechen. Damit wird der Zielbetriebspunkt schneller erreicht, da die Regelung nur noch justierend wirken muss. Die Zielwerte können sich während der Laufzeit ändern. Dies kann durch in situ Betrachtung des Systems berücksichtigt werden, indem durch Auswertung der Betriebsdaten der Innenwiderstand der Stacks und damit der Zustand des Systems berechnet wird.

Weiter kann entsprechend eine Regelung bei gepulster Leistung erfolgen, wobei die Zeit einer Lastphase kleiner als die Zeit ist, die die Edukte zum Passieren des Stack-Aktivbereichs benötigen.

In einer entsprechenden speziellen Ausgestaltung kann die Konvertierungsrate der Edukte an die über die Stromimpulse gemittelte Leistung angepasst werden, wobei diese im Bereich von 70 bis 85% liegt (vgl. Abb. 6 bis 8).

Anordnungsgemäß ist die Solid Oxide Cell [SOC]-Anordnung in einer wirtschaftlich besonders attraktiven und aus thermodynamischer Sicht bedeutsamen Variante bevorzugt mit dem SOC-Betriebsverfahren gemäß dem oben beschrieben Merkmalen ausgestattet, wobei die SOC mit einer Steuerung ausgestattet ist, wobei diese Steuerung das entsprechende oben beschriebene Solid Oxide Cell [SOC]- Betriebsverfahren ausführen kann.

Bevorzugt kann ein Hochtemperaturspeicher für schnelle Lastwechsel zur Konstanthaltung der Temperatur vorgesehen sein. Zusätzlich kann der Hochtemperaturspeicher elektrisch beheizbar sein.

Der Hochtemperaturspeicher kann insbesondere Wärmezuleitungen vom Stack aufweisen, wobei Wärme vom Stack an den Hochtemperaturspeicher bedarfsweise übertragen werden kann.

Der Hochtemperaturspeicher kann insbesondere vor dem Stack angeordnet sein.

Zur weiteren Optimierung und Verbesserung kann wenigstens eine anordnungsgemäße Ausgestaltung ausgewählt sein aus der Liste:

- Temperaturmessanordnung vor, im und/oder hinter Stack zur Regelung der Stacktemperatur u.a. mittels eines Luftverdichters;
- Temperaturmessanordnung vor dem Stack zur Regelung der Eintrittstemperatur der Prozessgase mittels elektrischen Heizern und/oder Hochtemperaturspeicher, wobei beide Einheiten kombinierbar sind oder mittels von Bypass-Ventilen, bei denen, bevorzugt auf der kalten Seite, ein Teilstrom der zuzuführenden Prozessgase abgezweigt und um die Wärmezuführenden Komponenten Wärmetauscher, elektrische Heizer und Hochtemperaturwärmespeicher herumgeführt werden;
- Temperaturmessanordnung im Hochtemperaturwärmespeicher, um damit den Ladezustand zu ermitteln und die Zu- oder Abführung von Wärme zu regeln;
- Leistungsregelung.

Eine weitere Optimierung des Systems ist weiterhin möglich, wenn die Betriebsführung möglichst dynamisch erfolgt, wobei dies insbesondere durch:

- Festlegung der Regelzeit < 5 Minuten zur Bereitstellung von Sekundärregelleistung;
- Spannungsgeführter Betrieb SOEC: um Zerstörung des Elektrolyten zu vermeiden, muss spannungsgeführt gefahren werden, um eine Temperaturerhöhung bei Erhöhung der Last abzuwarten;
- Feste Gas Conversion Rate (GCR) für Primärregelleistung, wobei nur die Last in einem engeren Bereich (z.B. 15 - 20 %) geregelt wird, Dampf bleibt konstant, wenn er in einer Industrieumgebung günstig zu erhalten ist;

- Schnelles Zuführen von Dampf durch Verwendung von möglichst kurzen Prozessgasleitungen ermöglichen;
- Öffnung Bypässe, um im SOFC-Modus schnell Temperatur der Edukte zu verringern;
- Umschaltung SOFC/RSOC;
- Dimensionierung Wärmeübertrager: möglichst groß, Bypass um Wärmeübertrager, wenn Kühlung nötig;
- Temperaturmessung vor und hinter (bzw. im) Stack zur Regelung von Regelung Bypass-Ventilen;
- Gepulster SOEC-Betrieb zwischen Hot Standby und thermoneutralem Betrieb, wobei dies insbesondere spannungsgeführt erfolgt, zur schnellen Umschaltung zwischen NULL und X-Last zur Bereitstellung von Regelleistung, wobei beim spannungsgeführten Betrieb eine Spannung vorgegeben wird, die Stromstärke dabei variabel ist, und beim stromgeführten Betrieb eine Stromstärke vorgegeben wird, worauf sich die Spannung einstellt;
- Hochtemperaturwärmespeicherung, bevorzugt auch mit Strom beheizt, wobei Lastspitzen aufgefangen werden können: Regelleistung, direkte Kopplung an erneuerbare Energien.

Nachfolgend werden Ausführungsbeispiele der Erfindung anhand der beiliegenden Abbildungen in der nachfolgenden Beschreibung detailliert beschrieben, wobei diese die Erfindung erläutern sollen und nicht beschränkend zu werten sind:

Es zeigen:

Abb. 1    eine schematische Darstellung eines ersten Ausführungsbeispiels / Betriebsmodus der Hotbox mit zwei weiteren alternativen Varianten;

Abb. 2    eine schematische Darstellung eines zweiten Ausführungsbeispiels / Betriebsmodus der Hotbox;

Abb. 3    eine schematische Darstellung eines dritten Ausführungsbeispiels / Betriebsmodus der Hotbox;

Abb. 4    eine schematische Darstellung der verschiedenen Betriebsmodi der SOC;

Abb. 5    die Anteile des Gesamtwärmestroms (y-Achse) in einer SOC in Abhängigkeit der Stromdichte (x-Achse);

Abb. 6    eine erste Darstellung eines ersten Betriebsmodus;

Abb. 7    eine zweite Darstellung eines zweiten Betriebsmodus und

Abb. 8    eine dritte Darstellung eines dritten Betriebsmodus.

An dieser Stelle soll darauf hingewiesen werden, dass die Abbildungen die Erfindung nicht beschränken sollen, sondern die Erfindung anhand von vorteilhaften Ausgestaltungen erläutern sollen.

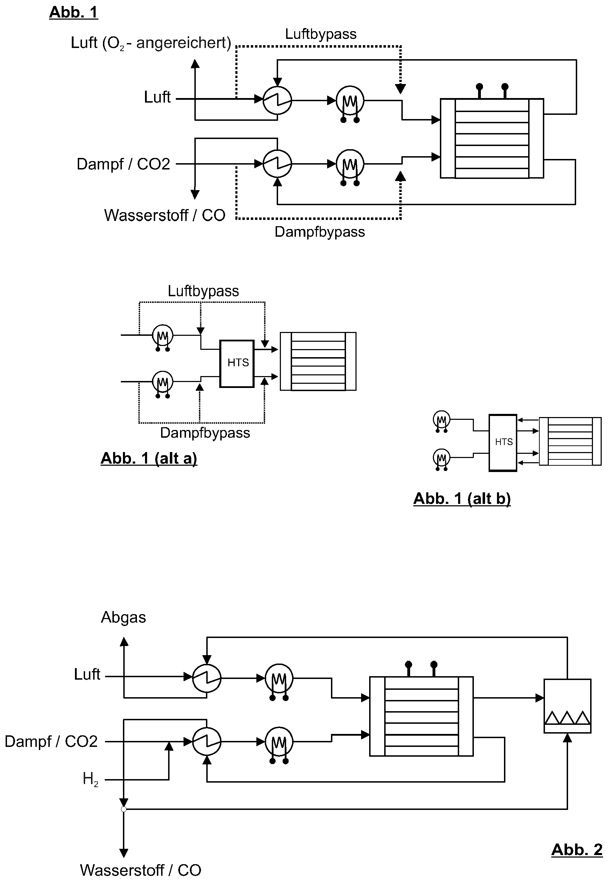

**Abb. 1** zeigt eine schematische Darstellung eines ersten Ausführungsbeispiels / Betriebsmodus der Hotbox.

Es ist ein einfaches SOEC System dargestellt. Es findet eine getrennte Medienerwärmung durch Wärmetauscher statt. Die eintretende Luft wird zunächst über einen Wärmetauscher mit der austretenden Luft erwärmt. Gleiches gilt für die Brenngasseite. Mit einem elektrischen Heizer kann die Medieneintrittstemperatur justiert werden. Die beiden Gasströme werden im SOEC-Stack zur Energieumwandlung zusammengeführt. Die austretenden Gasströme verlassen den Stack getrennt voneinander. Diese Anordnung kann durch Kombination mit Bypässen (gepunktete Linien) ergänzt werden. Die Bypässe ermöglichen eine schnellere Temperaturänderung der Eintrittsmedien, da sowohl elektrische Heizer als auch Wärmetauscher gasseitig sofort überbrückt werden.

Weiter ergänzt werden kann die Anordnung entsprechend der Abb. 1 (alt a) durch einen Hochtemperaturspeicher, der in einer Variante beispielsweise nach den elektrischen Heizern oder auch alternativ dazu angeordnet sein kann. Es können beide Medienzuleitungen von dem Hochtemperaturwärmetauscher mit Wärme beliefert werden. Der Speicher kann mit elektrischen Heizern beladen werden, die entweder in den Medienleitungen angeordnet oder auch im Speicher selbst vorgesehen sein können. Hier kann insbesondere Überschussstrom für die elektrischen Heizer verwendet werden um wirtschaftlich zu arbeiten. Auch diese Anordnung kann mit Bypässen ergänzt werden, wobei entweder der elektrische Heizer und/oder der Hochtemperaturspeicher durch einen Bypass überbrückt werden. Auch in diesem Fall können die Medieneintrittstemperaturen bei Bedarf schnell geändert werden.

In einer weiteren Ausführungsvariante entsprechend der Abb. 1 (alt b) kann der Hochtemperaturspeicher derart ausgestaltet sein, dass er zum einen Wärme an die Medienleitungen abgeben kann und gleichzeitig oder auch zeitlich versetzt Energie von dem Stack aufnehmen kann, wobei quasi eine Beladung des Hochtemperaturspeichers durch die Abwärme des Stacks erfolgt.

In einer weiteren Ausführungsvariante entsprechend der Abb. 1 (alt b) können Bypässe in die Medienzuleitungen integriert werden, wobei die Bypässe die Wärmetauscher überbrücken. Die Medienzuleitungen können den Hochtemperaturwärmespeicher und/oder die Medienleitungen vor dem Wärmetauscher mit dem Stack verbinden.

**Abb. 2** zeigt eine schematische Darstellung eines zweiten Ausführungsbeispiels / Betriebsmodus der Hotbox.

Zusätzlich zu Abb. 1 wird auf der H2-Seite vor dem Wärmetauscher Wasserstoff dosiert. Am Austritt kann nach dem H2-Wärmetauscher Wasserstoff entnommen werden um in einem Brenner (ganz rechts dargestellt) austretende Luft weiter aufzuheizen. Damit kann die eintretende Luft erwärmt werden. Diese Variante kann außerdem im SOFC-Modus betrieben werden. Zusätzlich zu H2 können auch CO2 und/oder CO zugeführt werden.

An dieser Stelle sei angemerkt, dass der Brenner auf der rechten Seite in dieser Ausführungsvariante auch bedarfsweise gestrichen werden könnte.

Zudem können in einer weiteren Ausgestaltung entsprechende Bypässe und Speicher, wie in der Beschreibung von Abb. 1 dargestellt, vorgesehen werden.

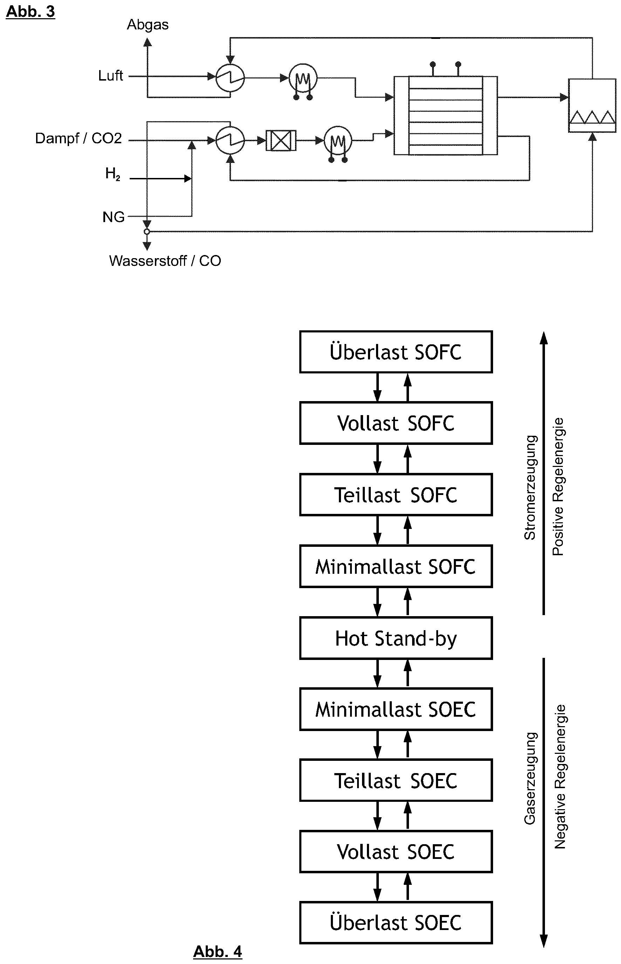

Der **Abb. 3** ist eine schematische Darstellung eines dritten Ausführungsbeispiels / Betriebsmodus der Hotbox entnehmbar.

Zusätzlich zu Abb. 2 kann auf der H2-Seite vor dem Wärmetauscher Erdgas (NG) oder andere Kohlenwasserstoffe dosiert werden und anschließend in einem Reformer reformiert zu werden. Durch eine Reformierung vor und innerhalb des Stacks sowie durch Regelung der Menge an NG und H2 kann im Stack eine Co-Elektrolyse erfolgen. Es entsteht ein Synthesegas, welches weiteren Prozessen zugeführt werden kann. Diese Variante kann zudem im SOFC-Modus mit Erdgas als Brennstoff betrieben werden.

An dieser Stelle sei angemerkt, dass der Brenner auf der rechten Seite in dieser Ausführungsvariante auch bedarfsweise gestrichen werden könnte.

Zudem können in einer weiteren Ausgestaltung entsprechende Bypässe und Speicher, wie in der Beschreibung von Abb. 1 dargestellt, vorgesehen werden.

Zudem können in einer weiteren Ausgestaltung entsprechende Bypässe und Speicher vorgesehen werden.

**Abb. 4** zeigt eine schematische Darstellung der verschiedenen Betriebsmodi der SOC.

Je nach Anforderung kann elektrische Energie und Wärmeenergie in chemische Energie umgewandelt werden (SOEC-Modus) oder chemische Energie in Wärmeenergie und elektrische Energie (SOFC-Modus). Dabei kann zwischen verschiedenen Lastpunkten (Minimallast, Teillast, Volllast und Überlast sowie Pulsbetrieb) variiert werden.

In **Abb. 5** sind die Anteile des Gesamtwärmestroms (y-Achse) in einer SOC in Abhängigkeit der Stromdichte (x-Achse) dargestellt. Die Quadranten 1 und 2 liegen in Bereichen positiver Stromdichte und stellen damit den SOFC-Betrieb dar. Die Quadranten 3 und 4 liegen in Bereichen negativer Stromdichte und stellen damit den SOEC Betrieb dar. Die Ohmsche Wärme folgt einem quadratischen Verlauf.

Dieser Verlauf ist durch den Graph G1 dargestellt. Die Reaktionswärme besitzt einen linearen Zusammenhang mit der Stromdichte, siehe G2 in der Abbildung.

Die Gesamtwärme ist die Summe aus ohmscher Wärme und Reaktionswärme und wird durch einen quadratischen Zusammenhang beschrieben, G3 in der Abbildung 9. Das Minimum dieser Kurve ist entsprechend der Reaktionswärme zum 3. Quadranten hin verschoben. Befindet sich der Graph G3 im Quadranten 3 ist die Wärmebilanz negativ, der Stack wird endotherm betrieben. Liegt der Graph G3 im Quadranten 1 oder 4, ist die Wärmebilanz positiv und der der Stack wird exotherm betrieben. Dadurch entstehen 2 Schnittpunkte (P0 und P1) mit der x-Achse. In diesen Punkten gleicht sich die Reaktionswärme mit den Ohmschen Verlusten aus. Der Stack befindet sich in einem thermoneutralem Betriebspunkt. Dieser Zusammenhang soll genutzt werden, um die SOEC zu regeln. Anstatt einen vorgegebenen Teillastpunkt konstant zu halten, was zwangsläufig zur Abkühlung des Stacks führt, wird zwischen dem thermoneutralen Punkt und dem Nullpunkt hochfrequent gewechselt, in dem eine Pulsweitenmodulation angewendet wird.

In den **Abbildungen 6, 7 und 8** sind mögliche Betriebsmodi beispielhaft dargestellt. Dabei variiert der Tastgrad zwischen 25%, 50% und 100%. Dies entspricht möglichen Lastpunkten bei 25%, 50% und 100%.

Da sowohl im Nullpunkt (Hotstand-by) P0 als auch im thermo-neutralen Betriebspunkt dem Stack keine Wärme entzogen wird, kann die Temperatur auch im Teillastmodus konstant hoch gehalten werden. Dies ermöglicht auch einen schnellen Wechsel in andere Betriebsmodi, zum Beispiel thermoneutral SOEC bei Nennlast, exotherm SOEC oder SOFC, da eine kleinere T-Änderung überwunden werden muss.

Der zugeführte Dampfstrom kann so gewählt werden, dass er einem 100%-Betriebspunkt entspricht. Jedoch führt es gerade in hohen Teillast-Punkten zu einem hohen Anteil an ungenutztem Dampf. Das Brenngasvolumen der SOC kann als Kapazität genutzt werden, so dass im Mittel auch höhere Dampfumsätze von z.B. 70% bis 85% im Teillastbetrieb gefahren werden können. Dazu ist es erforderlich, dass die Periodendauer T höchstens so groß ist, wie die Zeit $t_{BG}$, die das Brenngas zum Durchströmen des Aktivbereichs benötigt, da sonst eine Dampfverarmung insbesondere in Teillastpunkten eintreten kann. Das Verhältnis aus $t_{BG}$ und T soll demnach größer gleich 1 sein. Im vorliegenden Produkt beträgt die Strömungsgeschwindigkeit im Brenngasraum im Betriebsfall etwa 1 m/s. Auf 0,1 m Strömungslänge des Aktivbereiches passiert das Brenngas den Aktivbereich demnach in etwa 0,1 s. Die erforderliche Frequenz der Pulsweitenmodulation beträgt demnach mindestens 10 Hz. Bevorzugt soll bei höheren Frequenzen moduliert werden, um zeitliche Schwankungen des Betriebes zu verringern.

Nachfolgend sind weitere Beispiele dargestellt, die Dynamik einer SOC zu erhöhen:
Ein spannungsgeführter SOEC-Betrieb kann über die Leistungselektronik realisiert werden. Damit werden Überspannungen vorgebeugt, die zu einer Zerstörung des Elektrolyts bzw. der Zelle führen können.

Ein feste Gas Conversion Rate (GCR) für Primärregelleistung kann softwareseitig implementiert werden. Dadurch wird unter anderem eine gleichbleibende Qualität der Produktgase erzielt.

Eine schnelle Zuführung von Dampf wird durch relativ kurze Leitungen ermöglicht. Die Leerlaufspannung der SOC kann zur Prüfung der Zusammensetzung der Eintrittsmedien genutzt werden.

Die Wärmeübertrager sind derart dimensioniert, dass die thermische Masse gering ist, dennoch ein hinreichend hoher Wärmeaustauschstrom realisiert wird.

Durch die Nutzung eines Dampfreservoirs / z.B. einer vorhandenen Ringleitung der Industrie kann sofort Dampf bereitgestellt werden. Der Umschaltbetrieb von SOFC zu SOEC wird so verkürzt.

Durch einen Hot-Standby Modus (Betrieb der SOC im Leerlauf oder geringer Teillast) und zuströmenden heißen Gasen, bleibt die Temperatur Stack hoch, so dass eine schnelle Überführung in SOEC-Volllast ermöglicht wird.

Eine Temperaturmessung vor und hinter (oder im) Stack beschleunigt die Bereitstellung von Informationen zum Stackzustand. Mit diesen Informationen können Bypass-Ventile und Verdichter zeiteffizienter geregelt werden.

Um Wärmeübertrager parallel geschaltete Leitungen mit steuerbaren Ventilen (Bypässe) können genutzt werden, um im SOFC-Modus schnell die Temperatur der Edukte zu verringern.

Die Umschaltung zwischen den Modi SOFC und RSOC wird durch eine angepasste Regelung beschleunigt, ohne den Stack zu Schädigen. Dabei werden Temperaturen, die Medienflüsse und elektrische Parameter auf einander abgestimmt, verändert.

Ein Hochtemperaturwärmereservoir kann genutzt werden, um konstante Eintrittstemperaturen auch bei schnellen Wechseln der Eduktvolumenströme zu ermöglichen. Außerdem könnten hier volatile elektrische Leistungen eingebunden und in Form von Wärme mit nahe 100 % Wirkungsgrad gespeichert werden, wenn danach ein endothermer Betrieb erfolgt.

**Patentansprüche**

1. Solid Oxide Cell [SOC]- Betriebsverfahren, wobei die SOC wenigstens in einem der wenigstens drei Betriebsmodi SOFC oder SOEC oder rSOC, wobei die rSOC umfassend eine SOEC und eine SOFC ausgebildet ist, betreibbar ist,
   **dadurch gekennzeichnet, dass**
   die SOC dynamisch betrieben und/oder die SOEC in einem thermoneutralen Betriebspunkt gefahren wird.

2. SOC-Betriebsverfahren nach Anspruch 1,
   **dadurch gekennzeichnet, dass**

die SOC als dynamischer Energiewandler betrieben wird, wobei ein Energiewandeln in Abhängigkeit des Strompreises und/oder der Stromverfügbarkeit erfolgt.

3. SOC-Betriebsverfahren nach einem der vorangehenden Ansprüche,
**gekennzeichnet durch**
das Ausführen wenigstens einer der folgenden Prozessschritte:

- Bereitstellen von Regelleistung;
- Nachfahren eines Lastprofils von erneuerbarer Energie;
- Durchführen eines Lastmanagements.

4. SOC-Betriebsverfahren nach einem der vorangehenden Ansprüche,
**dadurch gekennzeichnet, dass**
eine Regelung des Betriebspunkts, ausgewählt aus gepulster Leistung und/oder spannungsgeführter Betrieb und/oder Nutzung von Bypässen und/oder Dampfregelung erfolgt.

5. SOC-Betriebsverfahren nach einem der vorangehenden Ansprüche,
**dadurch gekennzeichnet, dass**
eine Regelung bei gepulster Leistung erfolgt, wobei die Zeit einer Lastphase kleiner als die Zeit ist, die die Edukte zum Passieren des Stack-Aktivbereichs benötigen.

6. SOC-Betriebsverfahren nach einem der vorangehenden Ansprüche,
**dadurch gekennzeichnet, dass**
die Konvertierungsrate der Edukte an die über die Stromimpulse gemittelte Leistung angepasst wird, wobei diese im Bereich von 70 bis 85% liegt.

7. SOC-Betriebsverfahren nach einem der vorangehenden Ansprüche,
**dadurch gekennzeichnet, dass**
die Prozessgaseintrittstemperaturen vorausgewählt werden, wobei dies in Abhängigkeit der Beobachtung des Zustands der SOC und durch die Vorgabe eines Zielbetriebspunktes erfolgt.

8. SOC-Betriebsverfahren nach einem der vorangehenden Ansprüche,
**gekennzeichnet durch**
das Vorsehen und Nutzen eines Hochtemperaturspeichers für schnelle Lastwechsel zur Konstanthaltung der Temperatur, wobei

- ein Überführen von gespeicherter Wärme aus und/oder in den Hochtemperaturspeicher bei schnellen Lastwechseln
und/oder

- ein Ausgleich von fluktuierender Energie über den Hochtemperaturspeicher und/oder
- eine Umwandlung der gespeicherten Wärmeenergie in chemische Energie erfolgt.

9. SOC-Betriebsverfahren nach dem vorangehenden Anspruch,
**dadurch gekennzeichnet, dass**
ein zusätzliches bedarfsweises elektrisches Beheizen des Hochtemperaturspeichers erfolgt.

10. Solid Oxide Cell [SOC]-Anordnung, betrieben mit einem SOC-Betriebsverfahren nach einem der vorangehenden Ansprüche,
**dadurch gekennzeichnet, dass**
die SOC mit einer Steuerung ausgestattet ist, wobei diese Steuerung ein Solid Oxide Cell [SOC]- Betriebsverfahren nach einem der vorangehenden Verfahrensansprüche ausführt.

11. Solid Oxide Cell [SOC]-Anordnung nach dem vorangehenden Anordnungsanspruch,
**dadurch gekennzeichnet, dass**
ein Hochtemperaturspeicher für schnelle Lastwechsel zur Konstanthaltung und/oder Regelung der Temperatur vorgesehen ist.

12. Solid Oxide Cell [SOC]-Anordnung nach dem vorangehenden Anordnungsanspruch,
**dadurch gekennzeichnet, dass**
der Hochtemperaturspeicher

- Wärmezuleitungen vom Stack aufweist, wobei Wärme vom Stack an den Hochtemperaturspeicher bedarfsweise übertragen wird
und/oder
- elektrisch beheizbar ist.

13. Solid Oxide Cell [SOC]-Anordnung nach einem der zwei vorangehenden Anordnungsansprüche,
**dadurch gekennzeichnet, dass**
der Hochtemperaturspeicher vor dem Stack angeordnet ist.

14. Solid Oxide Cell [SOC]-Anordnung nach einem der vorangehenden Anordnungsansprüche,
**dadurch gekennzeichnet, dass**
wenigstens eine anordnungsgemäße Ausgestaltung ausgewählt aus der Liste:

- Temperaturmessanordnung vor, im und/oder hinter Stack zur Regelung der Stacktemperatur mittels eines Luftverdichters;
- Temperaturmessanordnung vor dem Stack zur Regelung der Eintrittstemperatur der Prozessgase mittels elektrischen Heizern und/oder Hochtemperaturspeicher, wobei bedarfsweise beide Einheiten kombinierbar sind, und/oder mittels von Bypass-Ventilen, bei denen, bevorzugt auf der kalten Seite, ein Teilstrom der zuzuführenden Prozessgase abgezweigt und um die wärmezuführenden Komponenten Wärmetauscher, elektrische Heizer und Hochtemperaturwärmespeicher herumführbar sind;
- Temperaturmessanordnung im Hochtemperaturwärmespeicher, um damit den Ladezustand zu ermitteln und die Zu- oder Abführung von Wärme zu regeln;
- Leistungsregelung;

umgesetzt ist.

Abb. 1

Luft (O$_2$- angereichert)

Luftbypass

Luft

Dampf / CO2

Wasserstoff / CO

Dampfbypass

Luftbypass

HTS

Dampfbypass

Abb. 1 (alt a)

HTS

Abb. 1 (alt b)

Abgas

Luft

Dampf / CO2

H$_2$

Wasserstoff / CO

Abb. 2

Abb. 3

Abgas

Luft

Dampf / CO2

H₂

NG

Wasserstoff / CO

Überlast SOFC

Vollast SOFC

Teillast SOFC

Minimallast SOFC

Hot Stand-by

Minimallast SOEC

Teillast SOEC

Vollast SOEC

Überlast SOEC

Stromerzeugung

Positive Regelenergie

Gaserzeugung

Negative Regelenergie

Abb. 4

Abb. 5

Abb. 6

Abb. 7

Periode

50 % Last          mittlere Last

Abb. 8

Periode

——— 100 % Last    — — — mittlere Last

Europäisches Patentamt

European Patent Office

Office européen des brevets

## EUROPÄISCHER RECHERCHENBERICHT

Nummer der Anmeldung

EP 19 16 9902

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2006/001863 A2 (ION AMERICA CORP [US]; MITLITSKY FRED [US] ET AL.) 5. Januar 2006 (2006-01-05) * Ansprüche 1, 3-7, 9, 16-28, 30-35, 37-47, 49-55, 57 * * Absätze [0017] - [0035], [0071] - [0083] * ----- | 1-14 | INV. C25B1/10 C25B15/02 C25B15/08 H01M8/18 ADD. H01M8/04014 |
| X | WO 2016/161999 A1 (SUNFIRE GMBH [DE]) 13. Oktober 2016 (2016-10-13) * Ansprüche 1, 8-11 * * Seite 8, Zeile 11 - Seite 9, Zeile 18 * * Seite 10, Zeile 12 - Seite 12, Zeile 22 * * Seite 15, Zeile 27 - Seite 16, Zeile 16 * ----- | 1-14 | H01M8/04007 H01M8/04701 H01M8/04828 H01M8/124 |
| X | US 2016/248137 A1 (CURIEN JEAN-BAPTISTE [FR] ET AL) 25. August 2016 (2016-08-25) * Ansprüche 1-5, 9 * * Absätze [0038] - [0053], [0072], [0073] * ----- | 1-14 | |
| X | US 2012/003552 A1 (BARNETT SCOTT A [US] ET AL) 5. Januar 2012 (2012-01-05) * Ansprüche 1, 9, 10, 15, 16, 21 * * Absatz [0056] * ----- | 1-14 | RECHERCHIERTE SACHGEBIETE (IPC) C25B H01M |
| X | JP 2010 176939 A (TOSHIBA CORP) 12. August 2010 (2010-08-12) * Ansprüche 1, 2, 4, 6, 7 * * Beispiele 1-4 * ----- | 1-14 | |

Der vorliegende Recherchenbericht wurde für alle Patentansprüche erstellt

| Recherchenort | Abschlußdatum der Recherche | Prüfer |
|---|---|---|
| München | 20. September 2019 | Perednis, Dainius |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 16 9902

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-09-2019

| Im Recherchenbericht angeführtes Patentdokument | Datum der Veröffentlichung | Mitglied(er) der Patentfamilie | Datum der Veröffentlichung |
|---|---|---|---|
| WO 2006001863 A2 | 05-01-2006 | EP 1784882 A2<br>US 2004224193 A1<br>US 2009269626 A1<br>US 2012052406 A1<br>US 2012321975 A1<br>WO 2006001863 A2 | 16-05-2007<br>11-11-2004<br>29-10-2009<br>01-03-2012<br>20-12-2012<br>05-01-2006 |
| WO 2016161999 A1 | 13-10-2016 | CN 107431219 A<br>EP 3281245 A1<br>JP 6573984 B2<br>JP 2018517233 A<br>US 2018287179 A1<br>WO 2016161999 A1 | 01-12-2017<br>14-02-2018<br>11-09-2019<br>28-06-2018<br>04-10-2018<br>13-10-2016 |
| US 2016248137 A1 | 25-08-2016 | EP 2869377 A1<br>EP 3063815 A1<br>JP 2016536752 A<br>US 2016248137 A1<br>WO 2015063170 A1 | 06-05-2015<br>07-09-2016<br>24-11-2016<br>25-08-2016<br>07-05-2015 |
| US 2012003552 A1 | 05-01-2012 | KEINE | |
| JP 2010176939 A | 12-08-2010 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5312699 B1

- EP 1618622 B1

**In der Beschreibung aufgeführte Nicht-Patentliteratur**

- **K. SCHWARZE ; O. POSDZIECH ; S. KROOP ; N. LAPEÑA-REY ; J. MERMELSTEIN.** Green Industrial Hydrogen via Reversible High-Temperature Electrolysis. *ECS Transactions,* 2017, vol. 78

- **Q. FU ; J. SCHEFOLD ; A. BRISSE ; J. U.NIELSEN.** *Durability Testing of a High-Temperature Steam Electrolyzer Stack at 700 °C*